# EUROPEAN PATENT SPECIFICATION

(11) **EP 4 476 049 B1**
(45) Date of publication and mention of the grant of the patent: **26.11.2025**
(21) Application number: 23702023.5
(22) Date of filing: 30.01.2023
(51) Int. Cl.: B29C 64/118, B33Y 10/00, B33Y 80/00, B33Y 70/10, B33Y 70/00

(54) **DEFORMABLE FDM FILAMENTS WITH FUNCTIONAL RIBBONS**
VERFORMBARE FDM-FILAMENTE MIT FUNKTIONELLEN BÄNDERN
FILAMENTS FDM DÉFORMABLES AVEC RUBANS FONCTIONNELS

(30) Priority: 08.02.2022 EP 22155520
(43) Date of publication of application: 18.12.2024
(73) Proprietor: Signify Holding B.V., 5656 AE Eindhoven (NL)
(72) Inventor: HIKMET, Rifat, Ata, Mustafa, 5656 AE Eindhoven (NL); VAN BOMMEL, Ties, 5656 AE Eindhoven (NL)
(74) Representative: Verweij, Petronella Daniëlle
(86) International application number: PCT/EP2023/052185
(87) International publication number: WO 2023/151977

(56) References cited:
- US-A1- 2020 061 934

## Description

### FIELD OF THE INVENTION

The invention relates to a method for manufacturing a 3D (printed) item. The invention also relates to the 3D (printed) item obtainable with such method. Further, the invention relates to a lighting device including such 3D (printed) item. Yet further, the invention also relates to a filament.

### BACKGROUND OF THE INVENTION

The use of entwined materials is known in the art. US2021/0187825, for instance, describes a process for manufacturing a three-dimensional printed object comprising: (a) providing a three-dimensional printer; and (b) depositing an entwined filamentary feedstock into said three-dimensional printer, wherein said entwined filamentary feedstock comprises: (i) a central core comprising a first filament, and (ii) a second filament at least partially entwined on said central core, wherein said entwined filamentary feedstock has an average diameter of 0.5 to 20 mm.

US2020/0061934 discloses a fiber precursor for use in an additive manufacturing process, wherein the fiber precursor is formed by wrapping a central fiber core with a fiber bundle having a substantially circular cross-section.

### SUMMARY OF THE INVENTION

Within the next 10-20 years, digital fabrication will increasingly transform the nature of global manufacturing. One of the aspects of digital fabrication is 3D printing. Currently, many different techniques have been developed in order to produce various 3D printed objects using various materials such as ceramics, metals, and polymers. 3D printing can also be used in producing molds which can then be used for replicating objects.

For the purpose of making molds, the use of polyjet technique has been suggested. This technique makes use of layer by layer deposition of photo-polymerizable material which is cured after each deposition to form a solid structure. While this technique produces smooth surfaces the photo curable materials are not very stable, and they also have relatively low thermal conductivity to be useful for injection molding applications.

The most widely used additive manufacturing technology is the process known as Fused Deposition Modeling (FDM). Fused deposition modeling (FDM) is an additive manufacturing technology commonly used for modeling, prototyping, and production applications. FDM works on an "additive" principle by laying down material in layers; a plastic filament or metal wire is unwound from a coil and supplies material to produce a part. Possibly, (for thermoplastics for example) the filament is melted and extruded before being laid down. FDM is a rapid prototyping technology. Other terms for FDM are "fused filament fabrication" (FFF) or "filament 3D printing" (FDP), which are considered to be equivalent to FDM. In general, FDM printers use a thermoplastic filament, which is heated to its melting point and then extruded, layer by layer, (or in fact filament after filament) to create a three-dimensional object. FDM printers are relatively fast, low cost and can be used for printing complicated 3D objects. Such printers are used in printing various shapes using various polymers. The technique is also being further developed in the production of LED luminaires and lighting solutions.

There is a desire to provide 3D printed objects with controllable properties. Further, there appears to be a desire to provide 3D printed objects with locally controlled properties and/or with a combination of different properties. Current production processes, and even current 3D printing processes, may not provide such functionality or may be relatively complex.

Hence, it is an aspect of the invention to provide an alternative 3D printing method and/or 3D (printed) item which preferably further at least partly obviate(s) one or more of above-described drawbacks. The present invention may have as object to overcome or ameliorate at least one of the disadvantages of the prior art, or to provide a useful alternative.

In a first aspect the invention provides a method for producing a 3D item (or "3D printed item", or "3D object" or "3D printed object") by means of fused deposition modelling. The method is defined in claim 1.

With such method it is possible to control properties of a 3D item. Further, with such method it is possible to provide 3D printed objects having locally controlled properties. It may also be possible to impose properties to the 3D item which may not be possible with standard additive manufacturing techniques and/or using standard additive manufacturing materials.

As indicated above, the invention provides a method for producing a 3D item by means of fused deposition modelling. Especially, the method may comprise 3D printing a filament comprising 3D printable material to provide the 3D item comprising 3D printed material. Hence, the 3D item may at least partly be produced by fused deposition modelling. Especially, the method may comprise layer-wise depositing 3D printable material to provide the 3D item comprising one or more layers of 3D printed material, especially one or more layers, especially a plurality of layers of 3D printed material. Hence, the 3D printable material when 3D printed may be indicated as 3D printed material. Further, especially the method may comprise a 3D printing stage comprising layer-wise depositing (an extrudate comprising) 3D printable material, to provide the 3D item comprising 3D printed material (on a receiver item (see also below), wherein the 3D item comprises one or more, especially a plurality, of layers of 3D printed material.

Especially, herein a specific filament may be used, which may be based on a core material comprising a thermoplastic material, and another material, especially having another composition and/or another structure than the core material. The material of the ribbon structure may be wrapped around the core material, like a helix or spiral. Such filament may also be indicated as "composite filament". Further, such filament may be 3D printed with a 3D printer. Hence, the filament may in embodiments comprise (i) a first core, and (ii) a first ribbon structure helically-like wrapped around the first core.

The first ribbon structure may comprise an elongated structure, wrapped around the first core. Each winding may be indicated as ribbon (or "loop"). In this way, the first ribbon structure may have the structure of a helix or spiral, but some (local) deviations, like e.g. in the radius and or in the pitch are herein not excluded. Hence, the first ribbon structure may not necessarily comply with the mathematical definition of a helix but may be helical-like. Hence, the first ribbon structure may be wound around the first core. Instead of the term "helically-like", and similar terms, also the terms "spirally" or "spiral-like" may be used. Herein, also the term "helically" may be used, indicating helically-like or substantially helical. Likewise, the term "wrapped around" does not necessarily imply that the first core of the filament has a (perfect) circular cross-section. The first core may be substantially circular in cross-section, though other shapes, or deviations or circular, may be possible. In specific embodiments, over a substantial part of the length of the filament, like over at least 50% of the length of the filament, the filament core may have a substantial circular cross-section.

As indicated above, during the method the 3D printable material is printed whereby the 3D item comprising 3D printed material is provided. For the printing method, especially a filament comprising (i) a first core, and (ii) a first ribbon structure wound around the first core may be applied. However, when printed the shape of the filament may have been converted in the shape of a layer, though the first ribbon structure may still be wrapped around the first core, the core may have been deformed and the first ribbon structure may have been deformed. For instance, this may be due to a higher relative speed of the nozzle, relative to the receiver item. Hereby, e.g. the first ribbon structure may be stretched. Alternatively or additionally, this may be due to some flattening of the 3D filament in the 3D printed state relative to relative to the not extruded material.

Instead of the term "round" also the terms "ribbon" or "loop" may be applied. The first ribbon structure is wound around or wrapped around the first core, thereby providing a plurality of rounds or ribbons. The ribbon structure comprises at least two ribbons, in general more than two ribbons, such as at least 4, like at least 10. However, much more is possible.

The filament may also comprise regions including ribbon structures alternated with regions not comprising a ribbon structure.

The ordinal numeral "first" in especially the terms "first core", "first perimeter", "first ribbon structure", "first round", and "first inter-ribbon region", and similar terms, especially refer to the 3D printable material and/or to the filament, i.e. the 3D printable material before it has passed the printer nozzle and has been deposited, to form a layer. However, when the 3D printable has been deposited, and has thereby become 3D printed material, the ordinal numeral "first" is not used anymore, and either no ordinal number is used, or the ordinal number "second" is used, such as especially in the terms "core", "second perimeter", "ribbon structure", "round", and "inter-ribbon region", and similar terms. For the sake of clarity, sometimes the word "second" is used preceding "core", "ribbon structure", "round", and "inter-ribbon region", and similar terms, in order to further indicate that it relates to the 3D printed material.

A filament according to the invention is set out in claim 14.

The first core may have a first perimeter P1. As indicated above, the core may have a circular cross-section, but may also have another cross-sectional shape. Should the cross-section be circular, then the perimeter is 2*π*R, wherein R is the radius.

As indicated above, the first ribbon structure comprises a plurality of first rounds, wound around the first core. Especially, however, the rounds (or ribbons), are configured such that there is some distance between adjacent ribbons. This may be over the entire length of the two rounds, or over part of the length of the two rounds. Hence, over part of the perimeter, there is a non-zero distance between adjacent rounds. In this way, the first ribbon structure does not fully cover the first core, and part(s) of the first core are exposed. Hence, a pitch of the rounds (or ribbons) may be larger than the first round width (or first ribbon width) w13.

Therefore, in embodiments nearest neighboring first rounds of at least one set of two first rounds may have a non-zero first mutual distance (d13) (over at least part of the first perimeter P1) thereby defining a first inter-ribbon region where the core material is exposed.

The filament comprising the first core and the first ribbon structure may be a hybrid material filament, with the first core comprising a first thermoplastic material, and the first ribbon structure comprising another material, or another material composition. The material of the first ribbon structure may be thermoplastic, but may also be different, like thermosetting, or metallic, etc. Hence, whereas the core material may undergo a glass transition at a glass transition temperature, and/or be meltable at a melting temperature, this may not necessarily apply for the first ribbon structure. The term "material" may also refer to material composition.

As the material of the first ribbon structure may not substantially add to adhesion between layers, the first inter-ribbon regions may be used to provide the necessary binding between adjacent layers. Hence, for this reason the first ribbon structure does not consist of ribbons that touch each other, but comprises one or more sets, especially a plurality of sets (of rounds), wherein adjacent rounds (ribbons) in the set may have a non-zero distance (over at least part of the perimeter).

The rounds (within such set) may have a first round width (or first ribbon width or first loop width) w13. In embodiments, the inter-ribbon distance (over at least part of the perimeter), may be at least 10%, such as at least 20% of the first round width.

Therefore, in embodiments the first rounds may have a first round width (w13), wherein d13≥0.2*w13. In specific embodiments, d13≥0.5*w13. Yet, in embodiments 0.5*w13≤d13≤2*w13, such as 0.75*w13≤d13≤1.5*w13. In such embodiments, arrangements into layers of such filament may relatively easily lead to a good ordering of the (second) ribbon structure of a first layer and a (second) ribbon structure of a second layer. In embodiments, d13≥1.5*w13, such as d13≥2*w13, like in specific embodiments d13≥3*w13. In such embodiments, it may be relatively easy to arrange the adjacent layers substantially freely, while having enough contact between (second) inter-ribbon regions. In embodiments, the rounds may have substantially the same round width (and round height).

The first rounds may have a thickness that may be smaller than the thickness (or in embodiments diameter) of the first core. A too high round may lead to less adhesion between layers, as also adherable parts may not be in physical contact or may be in physical contact over less area. Therefore, in embodiments the first core has a first core thickness (h13), wherein the first rounds have a first round thickness (h14), wherein in specific embodiments h14≤0.8*h13, more especially h14≤0.5*h13. Especially, in embodiments 0.05*h13≤h14≤0.5*h13. Further, in embodiments h14≤1*w13, more especially h14≤0.5*w13. More especially, in embodiments 0.05*w13≤h14≤0.5*w13. Hence, in embodiments the rounds may be relatively thin, like sheet material, such as in embodiments sheet metal.

The ribbon structure may have different functions. The ribbon structure may have an esthetic function. The ribbon structure may also provide a functional material or a functional component in a printable way. The ribbon structure may also provide a function to the 3D printed item. Functions may include optical functions, thermal conductivity functions, electrical conductivity functions, etc.

Therefore, in specific embodiments the first ribbon structure may comprise a ribbon material, wherein the core material and the ribbon material differ in one or more of an optical property, electrical conductivity, and thermal conductivity. For instance, the first ribbon structure may comprise a metal material. In other embodiments, the first ribbon structure may comprise a LED strip. In yet other embodiments, the first ribbon structure may comprise one or more electrically conductive tracks. Hence, in embodiments the first core may provide the backbone for at least part of the 3D item and the first ribbon structure may provide a (further) function.

In embodiments, the first ribbon structure may comprise one or more electrical conductors, like one or more electrically conductive tracks. Before or after printing, the (first) ribbon structure may be provided with a functional component, like one or more of a light source and a sensor. For instance, they may be provided to the (second) ribbon structure after 3D printing. In embodiments, the first ribbon structure may comprise two electrically conductive tracks, which may only electrically be coupled via an electrical component. Alternatively or additionally, two layers may be provided, each comprising a ribbon structure comprising an electrically conductive track, which may only electrically be coupled via an electrical component. The electrical component may e.g. be a source of electrical energy, a switch, a light source, and a sensor.

In specific embodiments, the optical property may be selected from the group of (a) absorption of light having a first wavelength, (b) diffuse reflection for light having the first wavelength, (c) specular reflection for light having the first wavelength, (d) transmission of light having the first wavelength, and (e) conversion of light having the first wavelength; wherein the first wavelength is selected from the range of 380-780 nm. For instance, the light may be daylight or may be white artificial light.

In specific embodiments, the core material may have a first optical property, wherein the ribbon material may have a second optical property, wherein the first optical property and the second optical property are different, for example with respect to (light of) a first wavelength. In embodiments, the first optical property and the second optical property may be selected from the group comprising: (a) ≥40% absorption of light having the first wavelength and the conversion of the absorbed light having the first wavelength is ≤10% of the absorbed light having the first wavelength; (b) ≥40% reflection of light having the first wavelength; (c) ≥40% transmission of light having the first wavelength; and (d) absorption and conversion of light having the first wavelength into second light having a spectral power distribution different from the absorbed light, wherein the conversion is at least 20% of the absorbed light having the first wavelength. More especially, in embodiments the first optical property and the second optical property are selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength.

In specific embodiments, the first ribbon structure comprises an electrical conductor while the core is non-electrically conductive (i.e. an insulator). In such embodiments, the first ribbon structure maybe electrically conductive or may comprise an electrical conductor, like e.g. a copper wire. Hence, the first ribbon structure may comprise or consist of an electrically conductive element.

An electrically conductive element may comprise, or essentially consist of electrically conductive material. An electrically insulating element may comprise, or essentially consist of electrically insulating material. Herein, in embodiments a conductive material may especially comprise a conductivity (at room temperature) of at least 1·10⁵ S/m, such as at least 1·10⁶ S/m. Herein, a conductivity of an insulated material may especially be equal to or smaller than 1·10⁻¹⁰ S/m, especially equal to or smaller than 1·10⁻¹³ S/m. Herein a ratio of an electrical conductivity of an isolating material (insulator) and an electrical conductivity of an electrically conductive material (conductor) may especially be selected smaller than 1·10⁻¹⁵.

Alternatively or additionally, the first ribbon structure may comprise a thermal conductor having a thermal conductivity of at least 100 W/(m*K). In such embodiments, the first ribbon structure may be thermally conductive or may comprise a thermal conductor, like e.g. a copper wire. Hence, the first ribbon structure may comprise or consist of a thermally conductive element.

A thermally conductive element especially may comprise thermally conductive material. A thermally conductive material may especially have a thermal conductivity of at least about 20 W/(m*K), like at least about 30 W/(m*K), such as at least about 100 W/(m*K), like especially at least about 200 W/(m*K). In yet further specific embodiments, a thermally conductive material may especially have a thermal conductivity of at least about 10 W/(m*K).

**In** embodiments, the thermally conductive material may comprise one or more of copper, aluminum, silver, gold, silicon carbide, aluminum nitride, boron nitride, aluminum silicon carbide, beryllium oxide, a silicon carbide composite, aluminum silicon carbide, a copper tungsten alloy, a copper molybdenum carbide, carbon, diamond, and graphite. Alternatively, or additionally, the thermally conductive material may comprise or consist of aluminum oxide.

**In** specific embodiments, the first ribbon structure may comprise a metal foil or a metal coated foil. Such metal foil or metal coated foil may be thin and relatively narrow and may be wrapped around a coil comprising thermoplastic material.

Further, the method may comprise selecting a configuration of the first ribbon structure and printing conditions such that two adjacent layers 322 are obtained wherein the thus obtained deposited (second) inter-ribbon regions of the two adjacent layers are in contact with each other. In embodiments, the method may comprise selecting a configuration of the first ribbon structure and printing conditions such that two adjacent layers 322 are obtained wherein the thus obtained deposited (second) inter-ribbon regions of the two adjacent layers are at least partly in contact with each other. Alternatively or additionally, in embodiments, the method may comprise selecting a configuration of the first ribbon structure and printing conditions such that two adjacent layers 322 are obtained wherein the thus obtained deposited (second) inter-ribbon regions of one of the two adjacent layers are partly in contact with rounds of (second) ribbon structure of the other one of the two adjacent layers.

In other embodiments, the method may comprise selecting a configuration of the first ribbon structure and printing conditions such that one or more of the thus obtained deposited inter-ribbon regions of the two adjacent layers are not in contact with each other.

Here, the phrase "in contact with each other", and similar phrases may especially refer to physical contact. In specific embodiments, this may also include adhesion or Vander Waals bonding. Hence, due to the fact that the thermoplastic material of one core may be in contact with an adjacent core, there may be adhesion between the layers.

As indicated above, the core material may comprise a thermoplastic material, which is herein indicated as first thermoplastic material. Further, at least part of the ribbon structure may be provided with a coating. The coating may comprise a coating material.

Hence, in embodiments the filament (or the 3D printed layer) may further comprising a coating over the (at least part of the) first rounds of the first ribbon structure.

Especially, in embodiments the coating material may comprise a thermoplastic material, which may be indicated as second thermoplastic material. Hence, in specific embodiments the first thermoplastic material may have a first glass transition temperature Tg1 and/or a first melting temperature Tm1, and wherein the second thermoplastic material has a second glass transition temperature Tg2 and or a second melting temperature Tm2, wherein one or more of the following applies: (a) Tg2>Tg1, and (b) Tm2>Tm1. However, other embodiments may also be possible.

In embodiments, the 3D printable material and the 3D printed material comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polyethylene terephthalate (PET), acrylonitrile butadiene styrene (ABS), poly(methyl methacrylate) (PMMA), polystyrene (PS), and styrene acrylic copolymers (SMMA).

Further, in an aspect the invention provides a method for producing a 3D item, wherein the method may comprise 3D printing a filament comprising 3D printable material to provide the 3D item comprising 3D printed material. In embodiments, the filament may comprise (i) a first core, and (ii) a first ribbon structure. Especially, the first ribbon structure may be wound around the first core. In embodiments, the first core comprises a core material. Especially, the core material may comprise a first thermoplastic material. Yet, the first core may have a first perimeter P1. Especially, in embodiments the first ribbon structure may comprise a plurality of first rounds (or loops). In specific embodiments, two nearest neighboring first rounds of at least one set of two first rounds may over at least part of the first perimeter P1 have a non-zero first mutual distance (d13). Hence, thereby a first inter-ribbon region may be defined. Hence, in embodiments the invention provides a method for producing a 3D item by means of fused deposition modelling, wherein: (A) the method comprises: 3D printing a filament comprising 3D printable material to provide the 3D item comprising 3D printed material; (B) the filament comprises (i) a first core, and (ii) a first ribbon structure wound around the first core; (C) the first core comprises a core material, wherein the core material comprises a first thermoplastic material; and wherein the first core has a first perimeter P1; and (D) the first ribbon structure comprises a plurality of first rounds, wherein two nearest neighboring first rounds of at least one set of two first rounds over at least part of the first perimeter P1 have a non-zero first mutual distance (d13) thereby defining a first inter-ribbon region.

Further, especially in an aspect the invention provides a method for producing a 3D item by means of fused deposition modelling, wherein the method may comprise the step of 3D printing a filament comprising 3D printable material to provide the 3D item comprising 3D printed material, wherein the filament comprises (i) a first core having a first thermoplastic material, and (ii) a first ribbon structure wound around the first core in a plurality of turns, and wherein adjacent turns of the first ribbon structure have a non-zero first mutual distance, thereby defining a first inter-ribbon region wherein the first thermoplastic material is exposed.

With such method(s) it is possible to control properties of 3D item. Further, with such method it is possible to provide 3D printed objects having locally controlled properties. It may also be possible to impose properties which may not be possible with standard additive manufacturing techniques and/or using standard additive manufacturing materials.

As indicated above, the method comprises depositing during a printing stage 3D printable material. Herein, the term "3D printable material" refers to the material to be deposited or printed, and the term "3D printed material" refers to the material that is obtained after deposition. These materials may be essentially the same, as the 3D printable material may especially refer to the material in a printer head or extruder at elevated temperature and the 3D printed material refers to the same material, but in a later stage when deposited. In embodiments, the 3D printable material may be printed as a filament and deposited as such. The 3D printable material may be provided as filament or may be formed into a filament. Hence, whatever starting materials are applied, a filament comprising 3D printable material may be provided by the printer head and 3D printed. The term "extrudate" may be used to define the 3D printable material downstream of the printer head, but not yet deposited. The latter may be indicated as "3D printed material". In fact, the extrudate may be considered to comprises 3D printable material, as the material is not yet deposited. Upon deposition of the 3D printable material or extrudate, the material may thus be indicated as 3D printed material. Essentially, the materials may be the same material, as the thermoplastic material upstream of the printer head, downstream of the printer head, and when deposited, may essentially be the same material(s).

Herein, the term "3D printable material" may also be indicated as "printable material". The term "polymeric material" may in embodiments refer to a blend of different polymers but may in embodiments also refer to essentially a single polymer type with different polymer chain lengths. Hence, the terms "polymeric material" or "polymer" may refer to a single type of polymers but may also refer to a plurality of different polymers. The term "printable material" may refer to a single type of printable material but may also refer to a plurality of different printable materials. The term "printed material" may refer to a single type of printed material but may also refer to a plurality of different printed materials.

Hence, the term "3D printable material" may also refer to a combination of two or more materials. In general, these (polymeric) materials have a glass transition temperature T_{g} and/or a melting temperature Tₘ. The 3D printable material will be heated by the 3D printer before it leaves the nozzle to a temperature of at least the glass transition temperature, and in general at least the melting temperature. Hence, in a specific embodiment the 3D printable material comprises a thermoplastic polymer having a glass transition temperature (T_{g}) and /or a melting point (Tₘ), and the printer head action may comprise heating the 3D printable material above the glass transition and in embodiments above the melting temperature (especially when the thermoplastic polymer is a semi-crystalline polymer). In yet another embodiment, the 3D printable material comprises a (thermoplastic) polymer having a melting point (Tₘ), and the 3D printing stage may comprise heating the 3D printable material to be deposited on the receiver item to a temperature of at least the melting point. The glass transition temperature is in general not the same thing as the melting temperature. Melting is a transition which may occur in crystalline polymers. Melting may happen when the polymer chains fall out of their crystal structures and become a disordered liquid. The glass transition may be a transition which happens to amorphous polymers; that is, polymers whose chains are not arranged in ordered crystals, but are just strewn around in any fashion, even though they are in the solid state. Polymers can be amorphous, essentially having a glass transition temperature and not a melting temperature or can be (semi) crystalline, in general having both a glass transition temperature and a melting temperature, with in general the latter being larger than the former. The glass temperature may e.g. be determined with differential scanning calorimetry. The melting point or melting temperature can also be determined with differential scanning calorimetry.

As indicated above, the invention may thus provide a method comprising providing a filament of 3D printable material and printing during a printing stage said 3D printable material on a substrate, to provide said 3D item.

Materials that may especially qualify as 3D printable materials may be selected from the group consisting of metals, glasses, thermoplastic polymers, silicones, etc. Especially, the 3D printable material comprises a (thermoplastic) polymer selected from the group consisting of ABS (acrylonitrile butadiene styrene), Nylon (or polyamide), Acetate (or cellulose), PLA (poly lactic acid), terephthalate (such as PET polyethylene terephthalate), acrylic (polymethylacrylate, Perspex, polymethylmethacrylate, PMMA), polypropylene (or polypropene), polycarbonate (PC), polystyrene (PS), PE (such as expanded- high impactpolythene (or polyethene), Low density (LDPE) High density (HDPE)), PVC (polyvinyl chloride), polychloroethene, such as thermoplastic elastomer based on copolyester elastomers, polyurethane elastomers, polyamide elastomers polyolefin based elastomers, styrene based elastomers, etc.. Optionally, the 3D printable material may comprise a 3D printable material selected from the group consisting of Urea formaldehyde, Polyester resin, Epoxy resin, Melamine formaldehyde, thermoplastic elastomer, etc... Optionally, the 3D printable material may comprise a 3D printable material selected from the group consisting of a polysulfone. Elastomers, especially thermoplastic elastomers, may especially be interesting as they are flexible and may help obtaining relatively more flexible filaments comprising the thermally conductive material. A thermoplastic elastomer may comprise one or more of styrenic block copolymers (TPS (TPE-s)), thermoplastic polyolefin elastomers (TPO (TPE-o)), thermoplastic vulcanizates (TPV (TPE-v or TPV)), thermoplastic polyurethanes (TPU (TPU)), thermoplastic copolyesters (TPC (TPE-E)), and thermoplastic polyamides (TPA (TPE-A)).

Suitable thermoplastic materials, such as also mentioned in WO2017/040893, may include one or more of polyacetals (e.g., polyoxyethylene and polyoxymethylene), poly(C₁₋₆ alkyl)acrylates, polyacrylamides, polyamides, (e.g., aliphatic polyamides, polyphthalamides, and polyaramides), polyamideimides, polyanhydrides, polyarylates, polyarylene ethers (e.g., polyphenylene ethers), polyarylene sulfides (e.g., polyphenylene sulfides), polyarylsulfones (e.g., polyphenylene sulfones), polybenzothiazoles, polybenzoxazoles, polycarbonates (including polycarbonate copolymers such as polycarbonate-siloxanes, polycarbonate-esters, and polycarbonate-ester-siloxanes), polyesters (e.g., polycarbonates, polyethylene terephthalates, polyethylene naphtholates, polybutylene terephthalates, polyarylates), and polyester copolymers such as polyester-ethers), polyetheretherketones, polyetherimides (including copolymers such as polyetherimidesiloxane copolymers), polyetherketoneketones, polyetherketones, polyethersulfones, polyimides (including copolymers such as polyimide- siloxane copolymers), poly(C₁₋₆ alkyl)methacrylates, polymethacrylamides, polynorbornenes (including copolymers containing norbomenyl units), polyolefins (e.g., polyethylenes, polypropylenes, polytetrafluoroethylenes, and their copolymers, for example ethylene- alpha- olefin copolymers), polyoxadiazoles, polyoxymethylenes, polyphthalides, polysilazanes, polysiloxanes, polystyrenes (including copolymers such as acrylonitrile-butadiene-styrene (ABS) and methyl methacrylate-butadiene-styrene (MBS)), polysulfides, polysulfonamides, polysulfonates, polysulfones, polythioesters, polytriazines, polyureas, polyurethanes, polyvinyl alcohols, polyvinyl esters, polyvinyl ethers, polyvinyl halides, polyvinyl ketones, polyvinyl thioethers, polyvinylidene fluorides, or the like, or a combination comprising at least one of the foregoing thermoplastic polymers. Embodiments of polyamides may include, but are not limited to, synthetic linear polyamides, e.g., Nylon-6,6; Nylon-6,9; Nylon-6,10; Nylon-6,12; Nylon-11; Nylon-12 and Nylon-4,6, preferably Nylon 6 and Nylon 6,6, or a combination comprising at least one of the foregoing. Polyurethanes that can be used include aliphatic, cycloaliphatic, aromatic, and polycyclic polyurethanes, including those described above. Also useful are poly(C₁₋₆ alkyl)acrylates and poly(C₁₋₆ alkyl)methacrylates, which include, for instance, polymers of methyl acrylate, ethyl acrylate, acrylamide, methacrylic acid, methyl methacrylate, n-butyl acrylate, and ethyl acrylate, etc. In embodiments, a polyolefin may include one or more of polyethylene, polypropylene, polybutylene, polymethylpentene (and co-polymers thereof), polynorbornene (and co-polymers thereof), poly 1-butene, poly(3-methylbutene), poly(4-methylpentene) and copolymers of ethylene with propylene, 1-butene, 1-hexene, 1-octene, 1-decene, 4-methyl-l-pentene and 1-octadecene.

In specific embodiments, the 3D printable material (and the 3D printed material) may comprise one or more of polycarbonate (PC), polyethylene (PE), high-density polyethylene (HDPE), polypropylene (PP), polyoxymethylene (POM), polyethylene naphthalate (PEN), styrene-acrylonitrile resin (SAN), polysulfone (PSU), polyphenylene sulfide (PPS), and semi-crystalline polyethylene terephthalate (PET), acrylonitrile butadiene styrene (ABS), poly(methyl methacrylate) (PMMA), polystyrene (PS), and styrene acrylic copolymers (SMMA).

The term 3D printable material is further also elucidated below, but may especially refer to a thermoplastic material, optionally including additives, to a volume percentage of at maximum about 60%, especially at maximum about 30 vol.%, such as at maximum 20 vol.% (of the additives relative to the total volume of the thermoplastic material and additives). Hence, in specific embodiments the core material may comprise at least 40 volume%, more especially at least 70 volume%, such as at least 80 volume% thermoplastic material. In specific embodiments, the core material essentially consists of the thermoplastic material. As can be derived from the above, the term "thermoplastic material" may also refer to a combination of different thermoplastic materials.

The printable material may thus in embodiments comprise two phases. The printable material may comprise a phase of printable polymeric material, especially thermoplastic material (see also below), which phase is especially an essentially continuous phase. **In** this continuous phase of thermoplastic material polymer additives such as one or more of antioxidant, heat stabilizer, light stabilizer, ultraviolet light stabilizer, ultraviolet light absorbing additive, near infrared light absorbing additive, infrared light absorbing additive, plasticizer, lubricant, release agent, antistatic agent, anti-fog agent, antimicrobial agent, colorant, laser marking additive, surface effect additive, radiation stabilizer, flame retardant, anti-drip agent may be present. The additive may have useful properties selected from optical properties, mechanical properties, electrical properties, thermal properties, and mechanical properties (see also above).

The printable material in embodiments may comprise particulate material, i.e. particles embedded in the printable polymeric material, which particles form a substantially discontinuous phase. The number of particles in the total mixture may especially not be larger than 60 vol.%, relative to the total volume of the printable material (including the (anisotropically conductive) particles) especially in applications for reducing thermal expansion coefficient. For optical and surface related effect number of particles in the total mixture is equal to or less than 20 vol.%, such as up to 10 vol.%, relative to the total volume of the printable material (including the particles). Hence, the 3D printable material may especially refer to a continuous phase of essentially thermoplastic material, wherein other materials, such as particles, may be embedded. Likewise, the 3D printed material especially refers to a continuous phase of essentially thermoplastic material, wherein other materials, such as particles, are embedded. The particles may comprise one or more additives as defined above. Hence, in embodiments the 3D printable materials may comprises particulate additives.

The printable material may be printed on a receiver item. Especially, the receiver item can be the building platform or can be comprised by the building platform. The receiver item can also be heated during 3D printing. However, the receiver item may also be cooled during 3D printing.

The phrase "printing on a receiver item" and similar phrases include amongst others directly printing on the receiver item, or printing on a coating on the receiver item, or printing on 3D printed material earlier printed on the receiver item. The term "receiver item" may refer to a printing platform, a print bed, a substrate, a support, a build plate, or a building platform, etc... Instead of the term "receiver item" also the term "substrate" may be used. The phrase "printing on a receiver item" and similar phrases include amongst others also printing on a separate substrate on or comprised by a printing platform, a print bed, a support, a build plate, or a building platform, etc... Therefore, the phrase "printing on a substrate" and similar phrases include amongst others directly printing on the substrate, or printing on a coating on the substrate or printing on 3D printed material earlier printed on the substrate. Here below, further the term substrate is used, which may refer to a printing platform, a print bed, a substrate, a support, a build plate, or a building platform, etc., or a separate substrate thereon or comprised thereby.

Layer by layer printable material may be deposited, by which the 3D printed item may be generated (during the printing stage). The 3D printed item may show a characteristic ribbed structures (originating from the deposited filaments). However, it may also be possible that after a printing stage, a further stage is executed, such as a finalization stage. This stage may include removing the printed item from the receiver item and/or one or more post processing actions. One or more post processing actions may be executed before removing the printed item from the receiver item and/or one more post processing actions may be executed after removing the printed item from the receiver item. Post processing may include e.g. one or more of polishing, coating, adding a functional component, etc... Postprocessing may include smoothening the ribbed structures, which may lead to an essentially smooth surface.

The herein described method provides 3D printed items. Hence, the invention also provides in a further aspect a 3D printed item obtainable with the herein described method. In a further aspect a 3D printed item obtainable with the herein described method is provided. Especially, the invention provides a 3D item comprising 3D printed material, wherein the 3D item comprises one or more layers, especially a plurality of layers, of 3D printed material. In embodiments, at least one of the layers may comprise (i) a (second) core comprising a (second) core material. In specific embodiments, the (second) core material may comprise a first thermoplastic material. Further, the (second) core may have a (second) layer perimeter P2. The at least one of the layers may also comprise (ii) a (second) ribbon structure, comprising a plurality of (second) rounds, wound around the (second) core. In embodiments, nearest neighboring (second) rounds of at least one set of two rounds may have a non-zero second mutual distance (d23) (over at least part of the second perimeter P2) thereby defining an inter-ribbon region, where the (second) core material is exposed. Hence, especially the invention provides in embodiments a 3D item comprising 3D printed material, wherein the 3D item comprises one or more layers, especially a plurality of layers of 3D printed material, wherein: (A) at least one of the layers comprises (i) a core (having a layer perimeter P2), comprises a core material, wherein the core material comprises a first thermoplastic material, and (ii) a ribbon structure, comprising a plurality of rounds, wound around the core; (B) nearest neighboring rounds of at least one set of two rounds have a non-zero second mutual distance (d23) (over at least part of the second perimeter P2) thereby defining an inter-ribbon region, where the core material is exposed. Further, in an aspect the invention provides a 3D item comprising 3D printed material, wherein the 3D item comprises one or more layers, especially a plurality of layers of 3D printed material, wherein: (A) at least one of the layers comprises (i) a core and (ii) a ribbon structure helically-like wrapped around the core; (B) the core comprises a core material, wherein the core material comprises a first thermoplastic material; and wherein the layer core has a layer perimeter P2; and (C) the ribbon structure comprises a plurality of ribbons, wherein two nearest neighboring ribbons of at least one set of two ribbons over at least part of the second perimeter P2 have a non-zero second mutual distance (d23) thereby defining an inter-ribbon region.

In embodiments, the filament may comprise two or more, like at least 5, such as at least 10, like in embodiments at least 20 sets of first rounds.

In embodiments, the 3D printed item may comprise a layer comprising two or more, like at least 5, such as at least 10, like in embodiments at least 20 sets of (second) rounds. In embodiments, the 3D printed item may comprise two or more, like at least 5, such as at least 10, like in embodiments at least 20 sets of (second) rounds. In embodiments, a layer of the 3D printed item may comprise regions including ribbon structures alternated with regions not comprising a ribbon structure. In embodiments, one or more layers of the 3D printed item may comprise regions including ribbon structures, and one or more layers of the 3D printed item may comprise regions not comprising a ribbon structure. Such regions with or without may each individually be at least about 1 mm², such as at least about 2 mm².

Especially, the 3D item comprises one or more layers of 3D printed material. More especially, the 3D item comprises a plurality of layers of 3D printed material. The 3D item may comprise two or more, like at least 5, such as at least 10, like in embodiments at least 20 layers of 3D printed material.

The 3D printed item may comprise a plurality of layers on top of each other, i.e. stacked layers. The width (thickness) and height of (individually 3D printed) layers may e.g. in embodiments be selected from the range of 100 - 5000 µm, such as 200-2500 µm, with the height in general being smaller than the width. For instance, the ratio of height and width may be equal to or smaller than 0.8, such as equal to or smaller than 0.6.

Layers may be core-shell layers or may consist of a single material. Within a layer, there may also be a change in composition, for instance when a core-shell printing process was applied and during the printing process it was changed from printing a first material (and not printing a second material) to printing a second material (and not printing the first material).

At least part of the 3D printed item may include a coating.

Some specific embodiments in relation to the 3D printed item have already been elucidated above when discussing the method. Below, some specific embodiments in relation to the 3D printed item are discussed in more detail.

In embodiments, the rounds may have a second round width (w23), wherein d23≥0.2*w12. In specific embodiments, d23≥0.5*w23. Yet, in embodiments 0.5*w23≤d23≤2*w23, such as 0.75*w23≤d23≤1.5*w23, though other values are herein not excluded.

In embodiments, the core may have a second core thickness (h23), wherein the rounds have a second round thickness (h24), wherein in specific embodiments h24≤0.8*h23, more especially h24≤0.5*h23. Especially, in embodiments 0.05*h23≤h24≤0.5*h23, though other values are herein not excluded.

In embodiments, h24≤1*w23, more especially h24≤0.5*w23. More especially, in embodiments 0.05*w23≤h24≤0.5*w23, though other values are herein not excluded.

As can be derived from the above, in embodiments the core material and the ribbon material may differ in one or more of an optical property, electrical conductivity, and thermal conductivity. Especially, in embodiments the core material and the ribbon material may differ in an optical property with respect to (light of) a first wavelength, wherein the optical property may be selected from the group of (a) absorption of light having the first wavelength, (b) diffuse reflection for light having the first wavelength, (c) specular reflection for light having the first wavelength, (d) transmission of light having the first wavelength, and (e) conversion of light having the first wavelength; wherein the first wavelength is selected from the range of 380-780 nm. In embodiments, the core material may have a first optical property, the ribbon material may have a second optical property. Further, in embodiments the first optical property and the second optical property may be different. Especially, in embodiments the first optical property and the second optical property may be selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength. Further embodiments are also described above.

The (with the herein described method) obtained 3D printed item may be functional per se. For instance, the 3D printed item may be a lens, a collimator, a reflector, etc... The thus obtained 3D item may (alternatively) be used for decorative or artistic purposes. The 3D printed item may include or be provided with a functional component. The functional component may especially be selected from the group consisting of an optical component, an electrical component, and a magnetic component. The term "optical component" especially refers to a component having an optical functionality, such as a lens, a mirror, a light transmissive element, an optical filter, etc... The term optical component may also refer to a light source (like a LED). The term "electrical component" may e.g. refer to an integrated circuit, PCB, a battery, a driver, but also a light source (as a light source may be considered an optical component and an electrical component), etc. The term magnetic component may e.g. refer to a magnetic connector, a coil, etc... Alternatively, or additionally, the functional component may comprise a thermal component (e.g. configured to cool or to heat an electrical component). Hence, the functional component may be configured to generate heat or to scavenge heat, etc...

As indicated above, the 3D printed item maybe used for different purposes. Amongst others, the 3D printed item maybe used in lighting. Hence, in yet a further aspect the invention also provides a lighting device comprising the 3D item as defined herein. In a specific aspect the invention provides a lighting system comprising (a) a light source configured to provide (visible) light source light and (b) the 3D item as defined herein, wherein 3D item may be configured as one or more of (i) at least part of a housing, (ii) at least part of a wall of a lighting chamber, and (iii) a functional component, wherein the functional component may be selected from the group consisting of an optical component, a support, an electrically insulating component, an electrically conductive component, a thermally insulating component, and a thermally conductive component. Hence, in specific embodiments the 3D item may be configured as one or more of (i) at least part of a lighting device housing, (ii) at least part of a wall of a lighting chamber, and (iii) an optical element. As a relative smooth surface may be provided, the 3D printed item may be used as mirror or lens, etc... In embodiments, the 3D item may be configured as shade. A device or system may comprise a plurality of different 3D printed items, having different functionalities.

Returning to the 3D printing process, a specific 3D printer may be used to provide the 3D printed item described herein.

The printer nozzle may include a single opening. The printer nozzle may be of the core-shell type, having two (or more) openings. The term "printer head" may also refer to a plurality of (different) printer heads; hence, the term "printer nozzle" may also refer to a plurality of (different) printer nozzles.

The 3D printable material providing device may provide a filament comprising 3D printable material to the printer head or may provide the 3D printable material as such, with the printer head creating the filament comprising 3D printable material.

Especially, the 3D printer comprises a controller (or is functionally coupled to a controller) that is configured to execute in a controlling mode (or "operation mode") the method as described herein. Instead of the term "controller" also the term "control system" (see e.g. above) may be applied.

The term "controlling", and similar terms especially refer at least to determining the behavior or supervising the running of an element. Hence, herein "controlling" and similar terms may e.g. refer to imposing behavior to the element (determining the behavior or supervising the running of an element), etc., such as e.g. measuring, displaying, actuating, opening, shifting, changing temperature, etc. Beyond that, the term "controlling", and similar terms may additionally include monitoring. Hence, the term "controlling", and similar terms may include imposing behavior on an element and also imposing behavior on an element and monitoring the element. The controlling of the element can be done with a control system, which may also be indicated as "controller". The control system and the element may thus at least temporarily, or permanently, functionally be coupled. The element may comprise the control system. In embodiments, the control system and element may not be physically coupled. Control can be done via wired and/or wireless control. The term "control system" may also refer to a plurality of different control systems, which especially are functionally coupled, and of which e.g. one control system may be a master control system and one or more others may be slave control systems. A control system may comprise or may be functionally coupled to a user interface.

The control system may also be configured to receive and execute instructions form a remote control. In embodiments, the control system may be controlled via an App on a device, such as a portable device, like a Smartphone or I-phone, a tablet, etc. The device is thus not necessarily coupled to the lighting system but may be (temporarily) functionally coupled to the lighting system.

Hence, the control system may (also) be configured to be controlled by an App on a remote device. In such embodiments the control system of the lighting system may be a slave control system or control in a slave mode. For instance, the lighting system may be identifiable with a code, especially a unique code for the respective lighting system. The control system of the lighting system may be configured to be controlled by an external control system which has access to the lighting system on the basis of knowledge (input by a user interface of with an optical sensor (e.g. QR code reader) of the (unique) code. The lighting system may also comprise means for communicating with other systems or devices, such as on the basis of Bluetooth, WIFI, LiFi, ZigBee, BLE or WiMAX, or another wireless technology.

The system, or apparatus, or device may execute an action in a "mode" or "operation mode" or "mode of operation". Likewise, in a method an action or stage, or step may be executed in a "mode" or "operation mode" or "mode of operation" or "operational mode". The term "mode" may also be indicated as "controlling mode". This does not exclude that the system, or apparatus, or device may also be adapted for providing another controlling mode, or a plurality of other controlling modes. Likewise, this may not exclude that before executing the mode and/or after executing the mode one or more other modes may be executed.

However, a control system may be available, that is adapted to provide at least the controlling mode. Would other modes be available, the choice of such modes may especially be executed via a user interface, though other options, like executing a mode in dependence of a sensor signal or a (time) scheme, may also be possible. The operation mode may in embodiments also refer to a system, or apparatus, or device, that can only operate in a single operation mode (i.e. "on", without further tunability).

Hence, in embodiments, the control system may control in dependence of one or more of an input signal of a user interface, a sensor signal (of a sensor), and a timer. The term "timer" may refer to a clock and/or a predetermined time scheme.

Instead of the term "fused deposition modeling (FDM) 3D printer" shortly the terms "3D printer", "FDM printer" or "printer" may be used. The printer nozzle may also be indicated as "nozzle" or sometimes as "extruder nozzle".

In yet a further aspect, the invention also provides a filament, such as described above. Hence, in an aspect the invention provides a filament that is defined in claim 14.

### BRIEF DESCRIPTION OF THE DRAWINGS

Embodiments of the invention will now be described, by way of example only, with reference to the accompanying schematic drawings in which corresponding reference symbols indicate corresponding parts, and in which:
Figs. 1a-1c schematically depict some general aspects of the 3D printer and of an embodiment of 3D printed material;
Fig. 2 schematically depicts some aspects;
Figs. 3a-3d schematically depicts some embodiments; and
Fig. 4 schematically depicts an application.

The schematic drawings are not necessarily to scale.

### DETAILED DESCRIPTION OF THE EMBODIMENTS

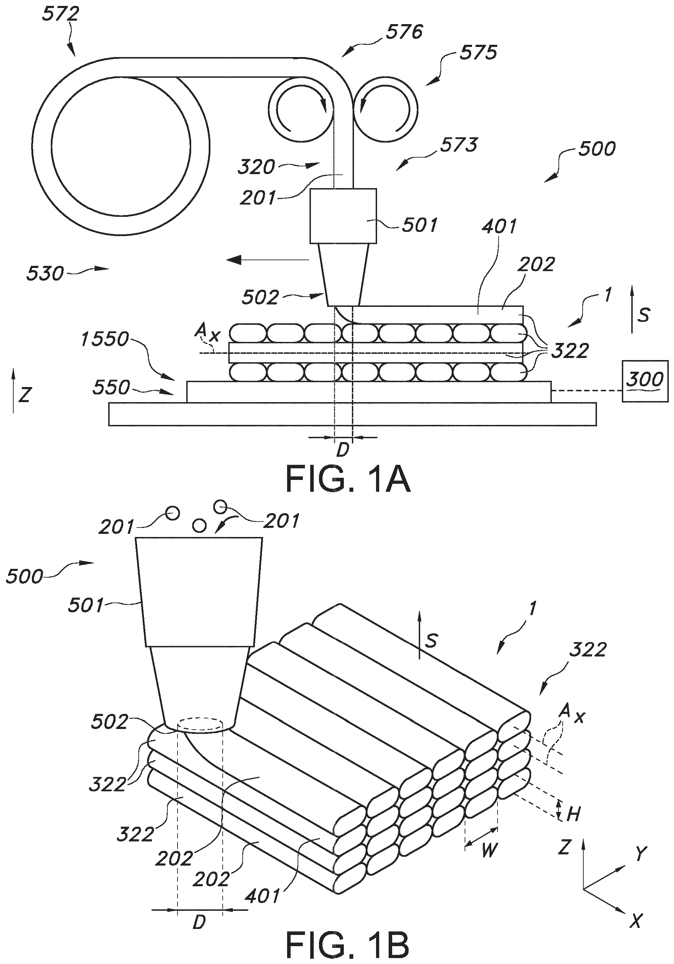

Fig. 1a schematically depicts some aspects of the 3D printer. Reference 500 indicates a 3D printer. Reference 530 indicates the functional unit configured to 3D print, especially FDM 3D printing; this reference may also indicate the 3D printing stage unit. Here, only the printer head for providing 3D printed material, such as an FDM 3D printer head is schematically depicted. Reference 501 indicates the printer head. The 3D printer of the present invention may especially include a plurality of printer heads (see below). Reference 502 indicates a printer nozzle. The 3D printer of the present invention may especially include a plurality of printer nozzles, though other embodiments are also possible. Reference 320 indicates a filament of printable 3D printable material (such as indicated above).

Instead of a filament also pellets may be used as 3D printable material. Both can be extruded via the printer nozzle.

For the sake of clarity, not all features of the 3D printer have been depicted, only those that are of especial relevance for the present invention (see further also below). Reference 321 indicates extrudate (of 3D printable material 201).

The 3D printer 500 is configured to generate a 3D item 1 by layer-wise depositing on a receiver item 550, which may in embodiments at least temporarily be cooled, a plurality of layers 322 wherein each layers 322 comprises 3D printable material 201, such as having a melting point Tₘ. The 3D printable material 201 may be deposited on a substrate 1550 (during the printing stage). By deposition, the 3D printable material 201 has become 3D printed material 202. 3D printable material 201 escaping from the nozzle 502 is also indicated as extrudate 321. Reference 401 indicates thermoplastic material (herein also indicated as "first thermoplastic material".

The 3D printer 500 may be configured to heat the filament 320 material upstream of the printer nozzle 502. This may e.g. be done with a device comprising one or more of an extrusion and/or heating function. Such device is indicated with reference 573 and is arranged upstream from the printer nozzle 502 (i.e. in time before the filament material leaves the printer nozzle 502). The printer head 501 may (thus) include a liquefier or heater. Reference 201 indicates printable material. When deposited, this material is indicated as (3D) printed material, which is indicated with reference 202.

Reference 572 indicates a spool or roller with material, especially in the form of a wire, which may be indicated as filament 320. The 3D printer 500 transforms this in an extrudate 321 downstream of the printer nozzle which becomes a layer 322 on the receiver item or on already deposited printed material. In general, the diameter of the extrudate 321 downstream of the nozzle 502 is reduced relative to the diameter of the filament 322 upstream of the printer head 501. Hence, the printer nozzle is sometimes (also) indicated as extruder nozzle. Arranging layer 322 by layer 322 and/or layer 322t on layer 322, a 3D item 1 may be formed. Reference 575 indicates the filament providing device, which here amongst others include the spool or roller and the driver wheels, indicated with reference 576.

Reference Ax indicates a longitudinal axis or filament axis.

Reference 300 schematically depicts a control system. The control system may be configured to control the 3D printer 500. The control system 300 may be comprised or functionally coupled to the 3D printer 500. The control system 300 may further comprise or be functionally coupled to a temperature control system configured to control the temperature of the receiver item 550 and/or of the printer head 501. Such temperature control system may include a heater which is able to heat the receiver item 550 to at least a temperature of 50 °C, but especially up to a range of about 350 °C, such as at least 200 °C.

Alternatively or additionally, in embodiments the receiver plate may also be moveable in one or two directions in the x-y plane (horizontal plane). Further, alternatively, or additionally, in embodiments the receiver plate may also be rotatable about z axis (vertical). Hence, the control system may move the receiver plate in one or more of the x-direction, y-direction, and z-direction.

Alternatively, the printer can have a head can also rotate during printing. Such a printer has an advantage that the printed material cannot rotate during printing.

Layers are indicated with reference 322, and have a layer height H and a layer width W.

Note that the 3D printable material is not necessarily provided as filament 320 to the printer head. Further, the filament 320 may also be produced in the 3D printer 500 from pieces of 3D printable material.

Reference D indicates the diameter of the nozzle (through which the 3D printable material 201 is forced). However, the nozzle is not necessarily circular.

Fig. 1b schematically depicts in 3D in more detail the printing of the 3D item 1 under construction. Here, in this schematic drawing the ends of the layers in a single plane are not interconnected, though in reality this may in embodiments be the case. Reference H indicates the height of a layer. Layers are indicated with reference 322. Here, the layers have an essentially circular cross-section. Often, however, they may be flattened, such as having an outer shape resembling a flat oval tube or flat oval duct (i.e. a circular shaped bar having a diameter that is compressed to have a smaller height than width, wherein the sides (defining the width) are (still) rounded).

Hence, Figs. 1a-1b schematically depict some aspects of a fused deposition modeling 3D printer 500, comprising (a) a first printer head 501 comprising a printer nozzle 502, (b) a filament providing device 575 configured to provide a filament 321 comprising 3D printable material 201 to the first printer head 501, and optionally (c) a receiver item 550. In Figs. 1a-1b, the first or second printable material or the first or second printed material are indicated with the general indications printable material 201 and printed material 202, respectively. Downstream of the nozzle 502, the filament 321 with 3D printable material becomes, when deposited, layer 322 with 3D printed material 202.

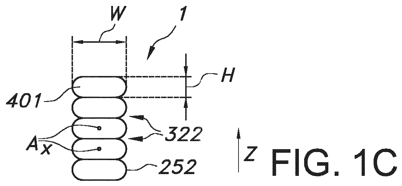

Fig. 1c schematically depicts a stack of 3D printed layers 322, each having a layer height H and a layer width W. Note that in embodiments the layer width and/or layer height may differ for two or more layers 322. The layer width and/or layer height may also vary within a layer. Reference 252 in Fig. 1c indicates the item surface of the 3D item (schematically depicted in Fig. 1c).

Referring to Figs. 1a-1c, the filament of 3D printable material that is deposited leads to a layer having a height H (and width W). Depositing layer 322 after layer 322, the 3D item 1 is generated. Fig. 1c very schematically depicts a single-walled 3D item 1.

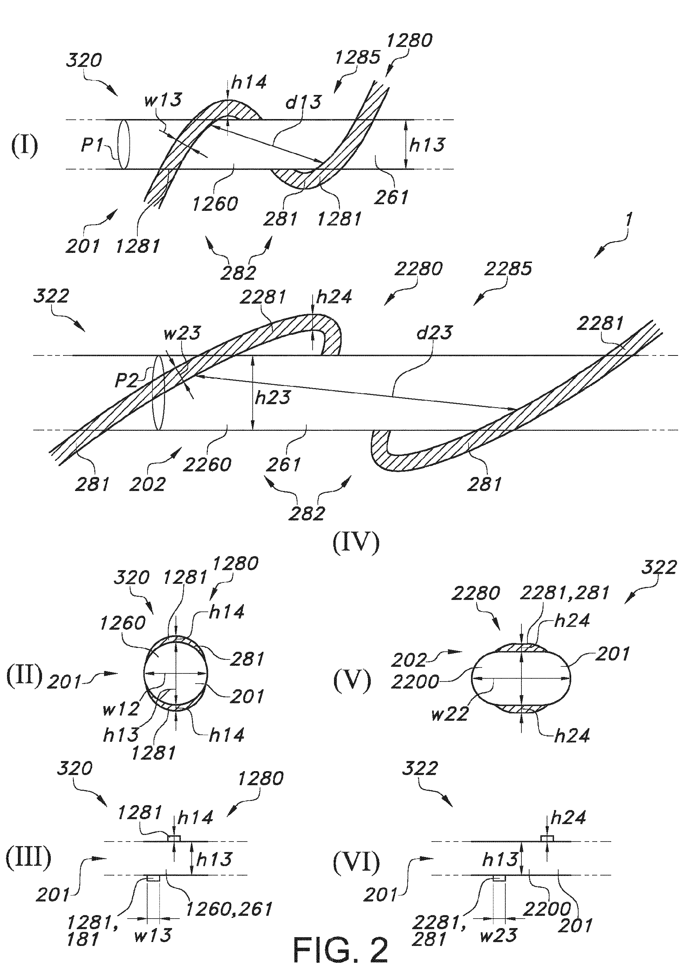

Fig. 2, especially embodiment I, schematically depicts an embodiment of a filament 320 comprising 3D printable material 201. In embodiments, the filament 320 comprises (i) a first core 1260 (having a first perimeter P1) comprising a core material 261, wherein the core material 1261 comprises a first thermoplastic material, and (ii) a first ribbon structure 1280, comprising a plurality of rounds 1281, wound around the first core 1260. Further, two nearest neighboring first rounds 1281 of at least one set 282 of two first rounds 1281 (over at least part of the first perimeter P1) may in embodiments have a non-zero first mutual distance d13 thereby defining a first inter-ribbon region 1285, where the core material 261 is exposed. This non-zero distance may be over the entire perimeter, as schematically depicted.

Figs. 1a-1c, and Fig. 2, especially embodiments I and IV, schematically (implicitly) depict a method for producing a 3D item 1 by means of fused deposition modelling. The method comprises: 3D printing a filament 320 comprising 3D printable material 201 to provide the 3D item 1 comprising 3D printed material 202. Embodiment I schematically depicts an embodiment of a filament 320 before 3D printing, and embodiment IV of Fig. 2 schematically depicts the 3D printed layer 322, which may be obtained by 3D printing the filament 320 of embodiment 1. Embodiments I and IV also schematically depict that when printed, the shape of the filament may have been converted in the shape of a layer, though the first ribbon structure may still be wrapped around the first core, the core may have been deformed and the first ribbon structure may have been deformed.

The filament 320 may (thus) comprises in embodiments (i) a first core 1260 (having a first perimeter P1), comprising a core material 261, wherein the core material 261 comprises a first thermoplastic material, and (ii) a first ribbon structure 1280, comprising a plurality of first rounds 1281, wound around the first core 1260. As indicated above, nearest neighboring first rounds 1281 of at least one set 282 of two first rounds 1281 have a non-zero first mutual distance d13 (over at least part of the first perimeter P1) thereby defining a first inter-ribbon region 1285 where the core material 261 is exposed. Especially, the first rounds 1281 may have a first round width w13, wherein d13≥0.2*w13. In embodiment, the first core 1260 may have a first core thickness h13, wherein the first rounds 1281 may have a first round thickness h14, wherein h14≤0.5*h13 may apply. In embodiments, h14≤0.5*w13 may apply.

Embodiments II and V schematically show cross-section of the filament of embodiment I and the 3D printed layer of embodiment IV. These cross-sections may be perpendicular to an axis of elongation of the filament 320 or the 3D printed layer 322.

Embodiments III and VI schematically show cross-section of the filament of embodiment I and the 3D printed layer of embodiment IV. These cross-sections may be parallel to an axis of elongation of the filament 320 or the 3D printed layer 322.

In embodiments, the first ribbon structure 1280 may comprise a ribbon material 281, wherein the core material 261 and the ribbon material 281 differ in one or more of an optical property, electrical conductivity, and thermal conductivity.

In specific embodiments, the optical property may be selected from the group of (a) absorption of light having a first wavelength, (a) diffuse reflection for light having the first wavelength, c specular reflection for light having the first wavelength, d transmission of light having the first wavelength, and e conversion of light having the first wavelength. The first wavelength may be selected from the range of 380-780 nm.

In embodiments, the core material 261 may have a first optical property, wherein the ribbon material 281 has a second optical property, wherein the first optical property and the second optical property are different with respect to (light of) a first wavelength, and wherein the first optical property and the second optical property are selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength.

In embodiments, the first ribbon structure 1280 may comprise an electrical conductor while the core is non-electrically conductive. Alternatively or additionally, in embodiments the first ribbon structure 1280 may comprise a thermal conductor having a thermal conductivity of at least 100. In embodiments, the first ribbon structure 1280 comprises a metal foil or a metal coated foil.

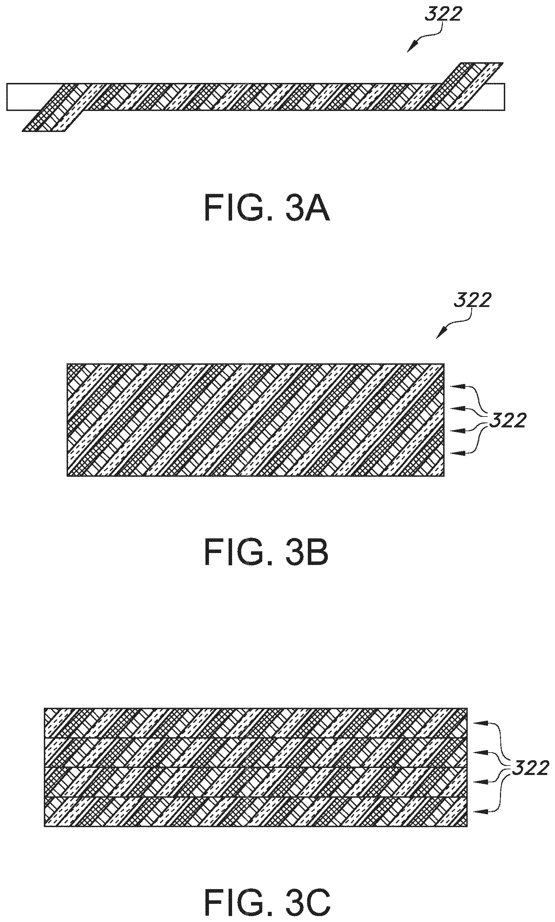

Referring to Figs. 3a-3d, the method may comprise selecting a configuration of the first ribbon structure 1280 and printing conditions such that two adjacent layers 322 are obtained wherein the thus obtained deposited inter-ribbon regions 2285 of the two adjacent layers 322 are in contact with each other.

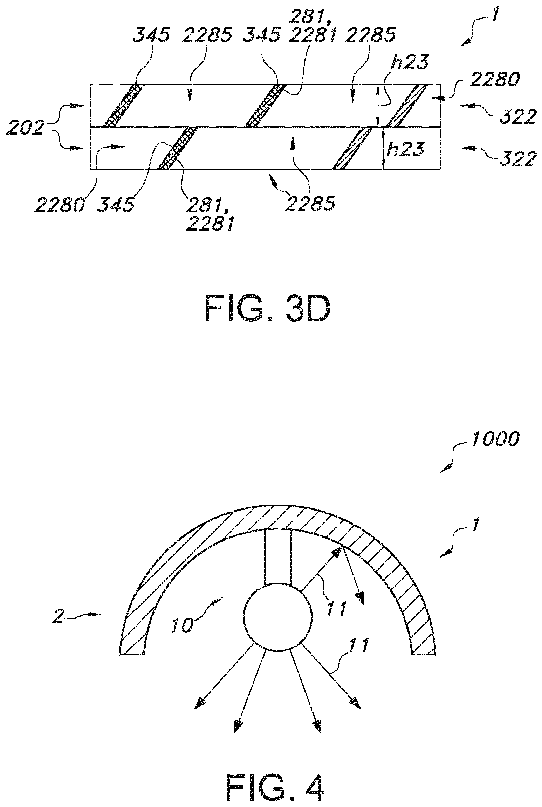

Referring to Fig. 3d, a coating 345 may be available over the first rounds of the first ribbon structure. This may lead to a 3D item comprising a coating 345 on the (second) rounds 2281 of the (second) ribbon structure 2280. The coating 345 may comprise in embodiments a second thermoplastic material, wherein the first thermoplastic material has a first glass transition temperature Tg1 and/or a first melting temperature Tm1, and wherein the second thermoplastic material has a second glass transition temperature Tg2 and or a second melting temperature Tm1, wherein one or more of the following applies: (a) Tg2>Tg1, and (a) Tm2>Tm1.

Referring to Fig. 2, e.g. embodiment IV, and Figs. 3a-3d, the 3D item 1 may comprise 3D printed material 202, wherein the 3D item 1 comprises one or more layers 322 of 3D printed material 202. At least one of the layers 322 may comprise (i) a core 2260 (having a layer perimeter P2), comprises a core material 261, wherein the core material 261 comprises a first thermoplastic material, and (ii) a ribbon structure 2280, comprising a plurality of rounds 2281, wound around the core 2260.

Nearest neighboring rounds 2281 of at least one set 282 of two rounds 2281 have a non-zero second mutual distance d23 (over at least part of the second perimeter P2) thereby defining an inter-ribbon region 2285, where the core material 261 is exposed.

In embodiments, the rounds 2281 may have a second round width w23, wherein d23≥0.2*w12. In embodiments, the core 2260 may have a second core thickness h23, wherein the rounds 2281 have a second round thickness h24, wherein h24≤0.5*h23 may apply. In embodiments, h24≤0.5*w23 may apply.

In embodiments, two adjacent layers 322, wherein: (a) the inter-ribbon regions 2285 of the two adjacent layers 322 are in contact with each other, see e.g. Fig. 3d. Hence, the thermoplastic material of one core may be in contact with the thermoplastic material of an adjacent core.

Fig. 4 schematically depicts an embodiment of a lamp or luminaire, indicated with reference 2, which comprises a light source 10 for generating light 11. The lamp may comprise a housing or shade or another element, which may comprise or be the 3D printed item 1. Here, the half sphere (in cross-sectional view) schematically indicates a housing or shade. The lamp or luminaire may be or may comprise a lighting device 1000 (which comprises the light source 10). Hence, in specific embodiments the lighting device 1000 comprises the 3D item 1. The 3D item 1 may be configured as one or more of (i) at least part of a lighting device housing, (ii) at least part of a wall of a lighting chamber, and (iii) an optical element. Hence, the 3D item may in embodiments be reflective for light source light 11 and/or transmissive for light source light 11. Here, the 3D item may e.g. be a housing or shade. The housing or shade comprises the item part 400. For possible embodiments of the item part 400, see also above.

Amongst others, it is herein proposed to helically wrap a ribbon around a filament which can be used in FDM printing. The ribbon may in embodiments comprise an (i) aesthetic and/or (ii) a functional sheet material. The result may in embodiments be an integrated sheet in a 3D printed object wherein the sheet is wrapped around an extruded filament. Thus, in specific embodiments the sheet may comprise (i) one or more optical layers and/or (ii) one or more electrical layers. To improve integration, in embodiments the sheet material comprises a thermoplastic polymer. The sheet material itself may be a thermoplastic polymer or the sheet may comprise a layer of a thermoplastic polymer (i.e. an adhesion layer), or other materials.

The sheet can be a multi-layer stack e.g. a foil with highly reflective layers. It may also be a sheet with a metallic layer e.g. of aluminum or silver deposited on a foil. Another example is a sheet with holographic structures.

The sheet may have an electrical and/or mechanical functionality. The sheet may comprise one or more electrically and/or thermally conductive layer. For example, the sheet may be a flex foil with a circuitry e.g. a polyimide sheet may comprise at least two cupper tracks. It may also comprise a cupper layer for thermal management only. Electrical components e.g. LEDs may be electrically and/or thermally attached to the metal layer on the sheet material.

Fig. 3a may e.g. be an example of ribbons with different colors wrapped around the filament. Between some ribbons, the core material is exposed.

Such a filament can be used for FDM printing. If the ribbons are made of a material which does not melt then the exposed areas of adjacent deposited filaments may be aligned so that layer to layer adhesion can be realized, see. e.g. Fig. 3b.

Would the ribbons be made of a material which can also melt the alignment is not necessary as schematically depicted in Fig. 3c.

It may also be possible to coat the ribbons with a material which melts in this way layers can get attached to each other.

The ribbons can be made of metal or graphite. When such ribbons are aligned, they can form a thermally and/ or electrically conductive.

During printing, if the diameter of the filament decreases during printing, then the pitch of the ribbon on the filament may become larger (see Fig. 2, embodiments I and IV).

However, would the diameter of the filament changes only slightly during printing, the pitch of ribbon may substantially stay the same.

In embodiments, an aluminum foil may be used as a ribbon on a polypropylene core material. Instead of polypropylene, also another thermoplastic material may be applied. Instead of an aluminum foil, also other ribbon materials may be applied.

The term "plurality" refers to two or more. The terms "substantially" or "essentially" herein, and similar terms, will be understood by the person skilled in the art. The terms "substantially" or "essentially" may also include embodiments with "entirely", "completely", "all", etc. Hence, in embodiments the adjective substantially or essentially may also be removed. Where applicable, the term "substantially" or the term "essentially" may also relate to 90% or higher, such as 95% or higher, especially 99% or higher, even more especially 99.5% or higher, including 100%. The term "comprise" also includes embodiments wherein the term "comprises" means "consists of". The term "and/or" especially relates to one or more of the items mentioned before and after "and/or". For instance, a phrase "item 1 and/or item 2" and similar phrases may relate to one or more of item 1 and item 2. The term "comprising" may in an embodiment refer to "consisting of' but may in another embodiment also refer to "containing at least the defined species and optionally one or more other species". Use of the verb "to comprise" and its conjugations does not exclude the presence of elements or steps other than those stated in a claim. Unless the context clearly requires otherwise, throughout the description and the claims, the words "comprise", "comprising", and the like are to be construed in an inclusive sense as opposed to an exclusive or exhaustive sense; that is to say, in the sense of "including, but not limited to". The article "a" or "an" preceding an element does not exclude the presence of a plurality of such elements.

Furthermore, the terms first, second, third and the like in the description and in the claims, are in general used for distinguishing between similar elements and not necessarily for describing a sequential or chronological order.

The devices, apparatus, or systems may herein amongst others be described during operation. As will be clear to the person skilled in the art, the invention is not limited to methods of operation, or devices, apparatus, or systems in operation. In the claims, any reference signs placed between parentheses shall not be construed as limiting the claim.

The invention may be implemented by means of hardware comprising several distinct elements, and by means of a suitably programmed computer. In a device claim, or an apparatus claim, or a system claim, enumerating several means, several of these means may be embodied by one and the same item of hardware. The mere fact that certain measures are recited in mutually different dependent claims does not indicate that a combination of these measures cannot be used to advantage.

It goes without saying that one or more of the first (printable or printed) material and second (printable or printed) material may in embodiments contain fillers such as glass and fibers which do not have (to have) influence on the on T_{g} or Tₘ of the material(s).

## Claims

1. A method for producing a 3D item (1) by means of fused deposition modelling, wherein:
- the method comprises: 3D printing a filament (320) comprising 3D printable material (201) to provide the 3D item (1) comprising 3D printed material (202);
- the filament (320) comprises (i) a first core (1260), comprising a core material (261), wherein the core material (261) comprises a first thermoplastic material, and (ii) a first structure (1280), comprising a plurality of first rounds (1281), wound around the first core (1260), **characterised in that** the first structure (1280) is a ribbon structure (1280) and **in that**
- nearest neighboring first rounds (1281) of at least one set (282) of two first rounds (1281) have a non-zero first mutual distance d13 thereby defining a first inter-ribbon region (1285) where the core material (261) is exposed.

2. The method according to claim 1, wherein the first rounds (1281) have a first round width w13, wherein d13≥0.2*w13.

3. The method according to claim 2, wherein:
- the first core (1260) has a first core thickness h13, wherein the first rounds (1281) have a first round thickness h14, wherein h14≤0.5*h13; and
- h14≤0.5*w13.

4. The method according to any one of the preceding claims, the first ribbon structure (1280) comprises a ribbon material (281), wherein the core material (261) and the ribbon material (281) differ in one or more of an optical property, electrical conductivity, and thermal conductivity.

5. The method according to claim 4, wherein the core material (261) has a first optical property, wherein the ribbon material (281) has a second optical property, wherein the first optical property and the second optical property are different with respect to a first wavelength, and wherein the first optical property and the second optical property are selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength.

6. The method according to any one of the preceding claims, wherein the first ribbon structure (1280) comprises an electrical conductor while the core is non-electrically conductive.

7. The method according to any one of the preceding claims, wherein the first ribbon structure (1280) comprises a thermal conductor having a thermal conductivity of at least 100 W/(m*K).

8. The method according to any one of the preceding claims, selecting a configuration of the first ribbon structure (1280) and printing conditions such that two adjacent layers 322 are obtained wherein: (a) the thus obtained deposited inter-ribbon regions (2285) of the two adjacent layers (322) are in contact with each other.

9. The method according to any one of the preceding claims, further comprising a coating (345) over the first rounds (1281) of the first ribbon structure (1280); wherein the coating (345) comprises a second thermoplastic material, wherein the first thermoplastic material has a first glass transition temperature Tg1 and/or a first melting temperature Tm1, and wherein the second thermoplastic material has a second glass transition temperature Tg2 and or a second melting temperature Tm2, wherein one or more of the following applies: (a) Tg2>Tg1, and (b) Tm2>Tm1.

10. A 3D item (1) comprising 3D printed material (202), wherein the 3D item (1) comprises one or more layers (322) of 3D printed material (202), wherein:
- at least one of the layers (322) comprises (i) a core (2260), comprises a core material (261), wherein the core material (261) comprises a first thermoplastic material, and (ii) a structure (2280), comprising a plurality of rounds (2281), wound around the core (2260), **characterised in that** the structure (2280) is a ribbon structure (2280) and **in that**
- nearest neighboring rounds (2281) of at least one set (282) of two rounds (2281) have a non-zero second mutual distance d23 thereby defining an inter-ribbon region (2285), where the core material (261) is exposed.

11. The 3D item (1) according to claim 10, wherein:
- the rounds (2281) have a second round width w23, wherein d23≥0 2*w23,
- the core (2260) has a second core thickness h23, wherein the rounds (2281) have a second round thickness h24, wherein h24≤0.5*h23; and
- h24≤0.5*w23.

12. The 3D item (1) according to any one of the preceding claims 10-11, wherein the core material (261) has a first optical property, wherein the ribbon material (281) has a second optical property, wherein the first optical property and the second optical property are different with respect to a first wavelength, and wherein the first optical property and the second optical property are selected from the group comprising: (a) ≥60% absorption of light having the first wavelength and the conversion of the absorbed light having the first wavelength is ≤10% of the absorbed light having the first wavelength; (b) ≥60% reflection of light having the first wavelength; (c) ≥60% transmission of light having the first wavelength; and (d) absorption and conversion of light having the first wavelength into second light having a spectral power distribution different from the absorbed light, wherein the conversion is at least 20% of the absorbed light having the first wavelength.

13. The 3D item (1) according to any one of the preceding claims 10-11, comprising two adjacent layers 322, wherein: (a) the inter-ribbon regions (2285) of the two adjacent layers (322) are in contact with each other, or (b) *none* of the inter-ribbon regions (2285) of the two adjacent layers (322) are in contact with each other.

14. A filament (320) comprising 3D printable material (201), wherein:
- the filament (320) comprises (i) a first core (1260) comprising a core material (261), wherein the core material (1261) comprises a first thermoplastic material, and (ii) a first structure (1280), comprising a plurality of rounds (1281), wound around the first core (1260); **characterised in that** the first structure (1280) is a ribbon structure and **in that**
- two nearest neighboring first rounds (1281) of at least one set (282) of two first rounds (1281) have a non-zero first mutual distance (d13) thereby defining a first inter-ribbon region (1285), where the core material (261) is exposed.

15. A lighting device (1000) comprising the 3D item (1) according to any one of the preceding claims 10-13, wherein the 3D item (1) is configured as one or more of (i) at least part of a lighting device housing, (ii) at least part of a wall of a lighting chamber, and (iii) an optical element.

## Patentansprüche

1. Verfahren zum Herstellen eines 3D-Artikels (1) mittels Schmelzschichtung, wobei:
- das Verfahren umfasst: 3D-Drucken eines Filaments (320) umfassend 3D-druckbares Material (201), um den 3D-Gegenstand (1) umfassend 3D-gedruckte Material (202) bereitzustellen,
- das Filament (320) umfasst: (i) einen ersten Kern (1260) umfassend ein Kernmaterial (261), wobei das Kernmaterial (261) ein erstes thermoplastisches Material umfasst, und (ii) eine erste Struktur (1280) umfassend eine Vielzahl von ersten Rundungen (1281), die um den ersten Kern (1260) gewickelt sind, **dadurch gekennzeichnet, dass** die erste Struktur (1280) eine Bandstruktur (1280) ist und dass
- am nächsten benachbarte erste Rundungen (1281) von mindestens einem Satz (282) aus zwei ersten Rundungen (1281) einen ersten gegenseitigen Abstand d13 ungleich null aufweisen und dadurch einen ersten Zwischenbandbereich (1285) definieren, in dem das Kernmaterial (261) freiliegt.

2. Verfahren nach Anspruch 1, wobei die ersten Rundungen (1281) eine erste Rundungsbreite w13 aufweisen, wobei d13 ≥ 0,2*w13.

3. Verfahren nach Anspruch 2, wobei:
- der erste Kern (1260) eine erste Kerndicke h13 aufweist, wobei die ersten Rundungen (1281) eine erste Rundungsdicke h14 aufweisen, wobei h14 ≤ 0,5*h13; und
- h14 ≤ 0,5*w13.

4. Verfahren nach einem der vorstehenden Ansprüche, wobei die erste Bandstruktur (1280) ein Bandmaterial (281) umfasst, wobei sich das Kernmaterial (261) und das Bandmaterial (281) in einer oder mehreren der folgenden Eigenschaften unterscheiden: optische Eigenschaft, elektrische Leitfähigkeit und Wärmeleitfähigkeit.

5. Verfahren nach Anspruch 4, wobei das Kernmaterial (261) eine erste optische Eigenschaft hat, wobei das Bandmaterial (281) eine zweite optische Eigenschaft hat, wobei die erste optische Eigenschaft und die zweite optische Eigenschaft in Bezug auf eine erste Wellenlänge unterschiedlich sind, und wobei die erste optische Eigenschaft und die zweite optische Eigenschaft aus der Gruppe ausgewählt werden, umfassend: (a) ≥ 60 % Absorption von Licht mit der ersten Wellenlänge und die Umwandlung des absorbierten Lichts mit der ersten Wellenlänge beträgt ≤ 10 % des absorbierten Lichts mit der ersten Wellenlänge; (b) ≥ 60 % Reflexion von Licht mit der ersten Wellenlänge;(c) ≥ 60 % Transmission von Licht mit der ersten Wellenlänge; und (d) Absorption und Umwandlung von Licht mit der ersten Wellenlänge in zweites Licht mit einer spektralen Leistungsverteilung, die sich von der des absorbierten Lichts unterscheidet, wobei die Umwandlung mindestens 20 % des absorbierten Lichts mit der ersten Wellenlänge beträgt.

6. Verfahren nach einem der vorstehenden Ansprüche, wobei die erste Bandstruktur (1280) einen elektrischen Leiter umfasst, während der Kern nicht elektrisch leitfähig ist.

7. Verfahren nach einem der vorstehenden Ansprüche, wobei die erste Bandstruktur (1280) einen Wärmeleiter mit einer Wärmeleitfähigkeit von mindestens 100 W/(m*K) umfasst.

8. Verfahren nach einem der vorstehenden Ansprüche, wobei eine Konfiguration der ersten Bandstruktur (1280) und Druckbedingungen so ausgewählt werden, dass zwei benachbarte Schichten 322 erhalten werden, wobei: (a) die so erhaltenen abgeschiedenen Zwischenbandbereiche (2285) der beiden benachbarten Schichten (322) miteinander in Kontakt sind.

9. Verfahren nach einem der vorstehenden Ansprüche, ferner umfassend eine Beschichtung (345) über den ersten Rundungen (1281) der ersten Bandstruktur (1280); wobei die Beschichtung (345) ein zweites thermoplastisches Material umfasst, wobei das erste thermoplastische Material eine erste Glasübergangstemperatur Tg1 und/oder eine erste Schmelztemperatur Tm1 aufweist, und wobei das zweite thermoplastische Material eine zweite Glasübergangstemperatur Tg2 und/oder eine zweite Schmelztemperatur Tm2 aufweist, wobei einer oder mehrere der folgenden Punkte zutreffen: (a) Tg2 > Tg1, und (b) Tm2 > Tm1.

10. 3D-Artikel (1) umfassend 3D-gedrucktes Material (202), wobei der 3D-Artikel (1) eine oder mehrere Schichten (322) aus 3D-gedrucktem Material (202) umfasst, wobei:
- mindestens eine der Schichten (322) umfasst: (i) einen Kern (2260), der ein Kernmaterial (261) umfasst, wobei das Kernmaterial (261) ein erstes thermoplastisches Material umfasst, und (ii) eine Struktur (2280) umfassend eine Vielzahl von Rundungen (2281), die um den Kern (2260) gewickelt sind, **dadurch gekennzeichnet, dass** die Struktur (2280) eine Bandstruktur (2280) ist und dass
- am nächsten benachbarte Rundungen (2281) von mindestens einem Satz (282) aus zwei Rundungen (2281) einen zweiten gegenseitigen Abstand d23 ungleich null aufweisen und dadurch einen Zwischenbandbereich (2285) definieren, in dem das Kernmaterial (261) freiliegt.

11. 3D-Artikel (1) nach Anspruch 10, wobei:
- die Rundungen (2281) eine zweite Rundungsbreite w23 aufweisen, wobei d23 ≥ 0,2*w23,
- der Kern (2260) eine zweite Kerndicke h23 aufweist, wobei die Rundungen (2281) eine zweite Rundungsdicke h24 aufweisen, wobei h24 ≤ 0,5*h23 ist; und
- h24 ≤ 0,5*w23.

12. 3D-Artikel (1) nach einem der vorstehenden Ansprüche 10 bis 11, wobei das Kernmaterial (261) eine erste optische Eigenschaft aufweist, wobei das Bandmaterial (281) eine zweite optische Eigenschaft aufweist, wobei die erste optische Eigenschaft und die zweite optische Eigenschaft in Bezug auf eine erste Wellenlänge unterschiedlich sind, und wobei die erste optische Eigenschaft und die zweite optische Eigenschaft aus der Gruppe ausgewählt sind umfassend: (a) ≥ 60 % Absorption von Licht mit der ersten Wellenlänge und die Umwandlung des absorbierten Lichts mit der ersten Wellenlänge beträgt ≤ 10 % des absorbierten Lichts mit der ersten Wellenlänge; (b) ≥ 60 % Reflexion von Licht mit der ersten Wellenlänge;(c) ≥ 60 % Transmission von Licht mit der ersten Wellenlänge; und (d) Absorption und Umwandlung von Licht mit der ersten Wellenlänge in zweites Licht mit einer spektralen Leistungsverteilung, die sich von der des absorbierten Lichts unterscheidet, wobei die Umwandlung mindestens 20 % des absorbierten Lichts mit der ersten Wellenlänge beträgt.

13. 3D-Artikel (1) nach einem der vorstehenden Ansprüche 11 bis 11, umfassend zwei benachbarte Schichten 322, wobei (a) die Zwischenbandbereiche (2285) der beiden benachbarten Schichten (322) miteinander in Kontakt sind, oder (b) *keine* der Zwischenbandbereiche (2285) der beiden benachbarten Schichten (322) miteinander in Kontakt sind.

14. Filament (320) umfassend 3D-druckbares Material (201), wobei:
- das Filament (320) umfasst: (i) einen ersten Kern (1260) umfassend ein Kernmaterial (261), wobei das Kernmaterial (1261) ein erstes thermoplastisches Material umfasst, und (ii) eine erste Struktur (1280) umfassend eine Vielzahl von Rundungen (1281), die um den ersten Kern (1260) gewickelt sind;
**dadurch gekennzeichnet, dass** die erste Struktur (1280) eine Bandstruktur ist und dass
- zwei am nächsten benachbarte erste Rundungen (1281) von mindestens einem Satz (282) aus zwei ersten Rundungen (1281) einen ersten gegenseitigen Abstand (d13) ungleich null aufweisen und dadurch einen ersten Zwischenbandbereich (1285) definieren, in dem das Kernmaterial (261) freiliegt.

15. Beleuchtungsvorrichtung (1000), umfassend das 3D-Element (1) nach einem der vorstehenden Ansprüche 10 bis 13, wobei das 3D-Element (1) als eines oder mehrere von (i) mindestens einem Teil eines Beleuchtungsvorrichtungsgehäuses, (ii) mindestens einem Teil einer Wand einer Beleuchtungskammer und (iii) einem optischen Element konfiguriert ist.

## Revendications

1. Procédé de production d'un article 3D (1) au moyen d'une modélisation de dépôt de fil fondu, dans lequel :
- le procédé comprend : l'impression 3D d'un filament (320) comprenant un matériau imprimable 3D (201) pour obtenir l'article 3D (1) comprenant un matériau imprimé 3D (202) ;
- le filament (320) comprend (i) une première âme (1260), comprenant un matériau d'âme (261), dans lequel le matériau d'âme (261) comprend un premier matériau thermoplastique, et (ii) une première structure (1280), comprenant une pluralité de premières spires (1281), enroulées autour de la première âme (1260), **caractérisé en ce que** la première structure (1280) est une structure en ruban (1280) et **en ce que**
- les premières spires (1281) voisines les plus proches d'au moins un ensemble (282) de deux premières spires (1281) présentent une première distance mutuelle d13 non nulle, définissant ainsi une première région inter-ruban (1285) où le matériau d'âme (261) est exposé.

2. Procédé selon la revendication 1, dans lequel les premières spires (1281) présentent une première largeur de spire w13, dans lequel d13 ≥ 0,2 * w13.

3. Procédé selon la revendication 2, dans lequel :
- la première âme (1260) présente une première épaisseur d'âme h13, dans lequel les premières spires (1281) présentent une première épaisseur de spire h14, dans lequel h14 ≤ 0,5 * h13 ; et
- h14 ≤ 0,5 * w13.

4. Procédé selon l'une quelconque des revendications précédentes, la première structure en ruban (1280) comprend un matériau de ruban (281), dans lequel le matériau d'âme (261) et le matériau de ruban (281) diffèrent par une ou plusieurs parmi une propriété optique, une conductivité électrique et une conductivité thermique.

5. Procédé selon la revendication 4, dans lequel le matériau d'âme (261) présente une première propriété optique, dans lequel le matériau de ruban (281) présente une seconde propriété optique, dans lequel la première propriété optique et la seconde propriété optique sont différentes par rapport à une première longueur d'onde, et dans lequel la première propriété optique et la seconde propriété optique sont choisies dans le groupe comprenant : (a) ≥ 60 % d'absorption de lumière ayant la première longueur d'onde et la conversion de la lumière absorbée ayant la première longueur d'onde est ≤ 10 % de la lumière absorbée ayant la première longueur d'onde ; (b) ≥ 60 % de réflexion de la lumière ayant la première longueur d'onde ; (c) ≥ 60 % de transmission de la lumière ayant la première longueur d'onde ; et (d) l'absorption et la conversion de la lumière ayant la première longueur d'onde en une seconde lumière ayant une distribution spectrale de puissance différente de la lumière absorbée, dans lequel la conversion est d'au moins 20 % de la lumière absorbée ayant la première longueur d'onde.

6. Procédé selon l'une quelconque des revendications précédentes, dans lequel la première structure en ruban (1280) comprend un conducteur électrique alors que l'âme n'est pas électriquement conductrice.

7. Procédé selon l'une quelconque des revendications précédentes, dans lequel la première structure en ruban (1280) comprend un conducteur thermique ayant une conductivité thermique d'au moins 100 W/(m*K).

8. Procédé selon l'une quelconque des revendications précédentes, sélectionnant une configuration de la première structure en ruban (1280) et des conditions d'impression telles que deux couches adjacentes 322 sont obtenues, dans lequel : (a) les régions inter-rubans (2285) déposées ainsi obtenues des deux couches adjacentes (322) sont en contact l'une avec l'autre.

9. Procédé selon l'une quelconque des revendications précédentes, comprenant en outre un revêtement (345) sur les premières spires (1281) de la première structure en ruban (1280) ; dans lequel le revêtement (345) comprend un second matériau thermoplastique, dans lequel le premier matériau thermoplastique présente une première température de transition vitreuse Tg1 et/ou une première température de fusion Tm1, et dans lequel le second matériau thermoplastique présente une seconde température de transition vitreuse Tg2 et/ou une seconde température de fusion Tm2, dans lequel un ou plusieurs des suivants s'appliquent : (a) Tg2 > Tg1, et (b) Tm2 > Tm1.

10. Article 3D (1) comprenant un matériau imprimé 3D (202), dans lequel l'article 3D (1) comprend une ou plusieurs couches (322) de matériau imprimé 3D (202), dans lequel :
- au moins l'une des couches (322) comprend (i) une âme (2260), comprend un matériau d'âme (261), dans lequel le matériau d'âme (261) comprend un premier matériau thermoplastique, et (ii) une structure (2280), comprenant une pluralité de spires (2281), enroulées autour de l'âme (2260), **caractérisé en ce que** la structure (2280) est une structure en ruban (2280) et **en ce que**
- les spires (2281) voisines les plus proches d'au moins un ensemble (282) de deux spires (2281) présentent une seconde distance mutuelle d23 non nulle, définissant ainsi une région inter-ruban (2285), où le matériau d'âme (261) est exposé.

11. Article 3D (1) selon la revendication 10, dans lequel :
- les spires (2281) présentent une seconde largeur de spire w23, dans lequel d23 ≥ 0 2 * w23,
- l'âme (2260) présente une seconde épaisseur d'âme h23, dans lequel les spires (2281) présentent une seconde épaisseur de spire h24, dans lequel h24 ≤ 0,5 * h23 ; et
- h24 ≤ 0,5 * w23.

12. Article 3D (1) selon l'une quelconque des revendications précédentes 10 à 11, dans lequel le matériau d'âme (261) présente une première propriété optique, dans lequel le matériau de ruban (281) présente une seconde propriété optique, dans lequel la première propriété optique et la seconde propriété optique sont différentes par rapport à une première longueur d'onde, et dans lequel la première propriété optique et la seconde propriété optique sont choisies dans le groupe comprenant : (a) ≥ 60 % d'absorption de lumière ayant la première longueur d'onde et la conversion de la lumière absorbée ayant la première longueur d'onde est ≤ 10 % de la lumière absorbée ayant la première longueur d'onde ; (b) ≥ 60 % de réflexion de la lumière ayant la première longueur d'onde ; (c) ≥ 60 % de transmission de la lumière ayant la première longueur d'onde ; et (d) l'absorption et la conversion de la lumière ayant la première longueur d'onde en une seconde lumière ayant une distribution spectrale de puissance différente de la lumière absorbée, dans lequel la conversion est d'au moins 20 % de la lumière absorbée ayant la première longueur d'onde.

13. Article 3D (1) selon l'une quelconque des revendications précédentes 10 à 11, comprenant deux couches adjacentes 322, dans lequel : (a) les régions inter-rubans (2285) des deux couches adjacentes (322) sont en contact l'une avec l'autre, ou (b) *aucune* des régions inter-rubans (2285) des deux couches adjacentes (322) n'est en contact l'une avec l'autre.

14. Filament (320) comprenant un matériau imprimable 3D (201), dans lequel :
- le filament (320) comprend (i) une première âme (1260) comprenant un matériau d'âme (261), dans lequel le matériau d'âme (1261) comprend un premier matériau thermoplastique, et (ii) une première structure (1280), comprenant une pluralité de spires (1281), enroulées autour de la première âme (1260) ; **caractérisé en ce que** la première structure (1280) est une structure en ruban et **en ce que**
- deux premières spires (1281) voisines les plus proches d'au moins un ensemble (282) de deux premières spires (1281) présentent une première distance mutuelle (d13) non nulle, définissant ainsi une première région inter-ruban (1285), où le matériau d'âme (261) est exposé.

15. Dispositif d'éclairage (1000) comprenant l'article 3D (1) selon l'une quelconque des revendications précédentes 10 à 13, dans lequel l'article 3D (1) est conçu comme un ou plusieurs parmi (i) au moins une partie d'un logement de dispositif d'éclairage, (ii) au moins une partie d'une paroi d'une chambre d'éclairage, et (iii) un élément optique.
